# FASCICULE DE BREVET EUROPEEN

(11) **EP 4 627 228 B1**
(45) Date de publication et mention de la délivrance du brevet: **02.12.2026**
(21) Numéro de dépôt: 23813008.2
(22) Date de dépôt: 28.10.2023
(51) Int. Cl.: F16D 65/00

(54) **PERÇAGE INCLINÉ D'ENTRÉE D'AIR**
SCHRÄGES LUFTEINLASS-BOHREN
INCLINED AIR INLET DRILLING

(30) Priorité: 02.12.2022 FR 2212695
(43) Date de publication de la demande: 08.10.2025
(73) Titulaire: Tallano Technologies, 75015 Paris (FR); AKWEL, 01410 Champfromier (FR)
(72) Inventeur: ADAMCZAK, Loïc, 75015 Paris (FR); MAISTRE, Adrien, 75015 Paris (FR)
(74) Mandataire: Plasseraud IP
(86) Numéro de dépôt international: PCT/FR2023/051707
(87) Numéro de publication internationale: WO 2024/115831

(56) Documents cités:
- WO-A1-2019/215402
- WO-A1-2020/074841
- WO-A1-2020/193775
- DE-A1- 102020 107 847
- FR-A1- 3 057 040
- FR-A1- 3 076 876
- FR-A1- 3 091 912

## Description

La présente invention est relative aux systèmes de freinage non polluants, destinés à être utilisés dans des machines comportant un élément rotatif dont on veut freiner la rotation, tels que par exemple des véhicules routiers (voitures, bus, camions) ou ferroviaires, des éoliennes. Dans de tels systèmes de freinage, des particules et poussières sont émises par le freinage à friction comme résultat de l'abrasion de plaquettes de frein contre l'élément rotatif. Cet élément rotatif est par exemple la roue du véhicule, ou un disque entrainé par la roue du véhicule. Il est connu que ces particules dispersées dans le milieu ambiant sont nocives pour la santé des individus. En outre la progression des motorisations électriques pour les véhicules automobiles a renforcé le besoin de traiter les particules et poussières résultant de l'abrasion des systèmes de freinage à friction.

Il existe donc un besoin de capter ces particules et poussières avant qu'elles soient libérées dans le milieu ambiant. Un moyen dans ce but consiste à munir la garniture de la plaquette de disque de frein ou de semelle de roue d'une rainure qui est reliée à une source de dépression, les particules étant alors évacuées et aspirées dans cette rainure. Le document FR3076876A1 décrit une plaquette de frein rainurée classique, avec une rainure droite.

Ainsi, on connait une plaquette de frein 10 dans un frein à disque, la plaquette comprenant une semelle 1 avec une face externe 14, une face interne 13 et un bord latéral 11, et une garniture 2 en matériau de friction fixée sur la face interne 13, la garniture 2 étant délimitée par une face de friction 26, une face de fixation 20, et un bord latéral formé d'un bord intérieur 23, d'un bord extérieur 24, d'un bord arrière 21, et d'un bord avant 22. La garniture 2 est pourvue d'une rainure de collecte 3 qui est ouverte sur la face de friction 26 et qui est située à proximité du bord arrière 21, la semelle 1 comprenant un trou d'aspiration 17 en communication fluide avec la rainure de collecte 3. Le trou d'aspiration 17 est relié à une source de dépression via des moyens de communication.

Cependant, il se produit en fonctionnement une baisse des performances d'aspiration au fur et à mesure de l'usure de la garniture. En effet, l'usure entraine une augmentation des pertes de charge linéaires, pertes de charge qui forcent la source d'aspiration (par exemple une turbine) à réduire son débit. Il en résulte une diminution des performances de captation des particules et poussières par la rainure de collecte.

Pour que ces performances de captation restent constantes malgré l'usure de la garniture 2, on connait, comme décrit dans le document FR 3087238, une plaquette de frein dans lequel la rainure de collecte 3 se prolonge à une de ses extrémités par un conduit 90 rectiligne dont l'extrémité externe 91 débouche hors de la face de friction 26 par une entrée 911, et dont l'extrémité interne 92 débouche dans la rainure de collecte 3 par une sortie 922 qui forme un saut de section avec la rainure 3.

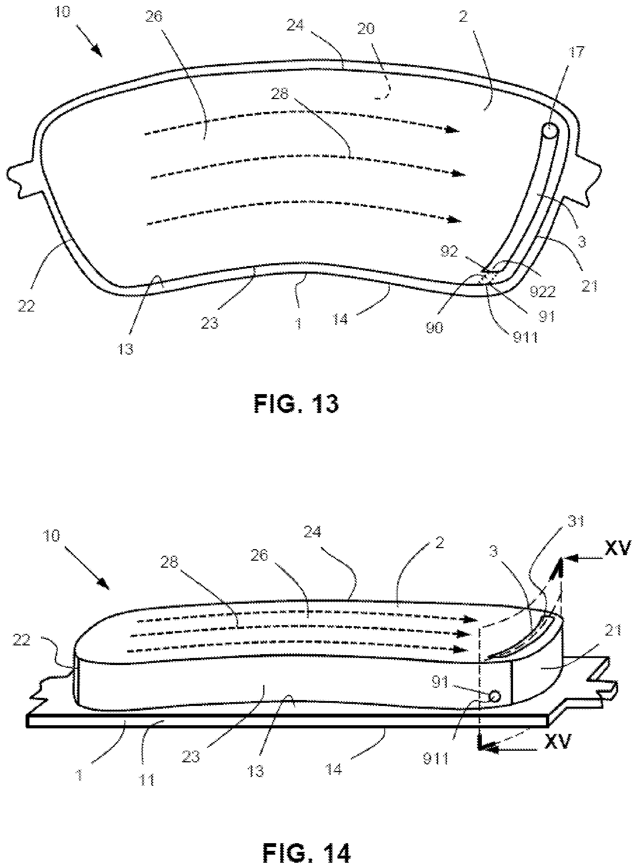

Une telle plaquette est illustrée en figures 13 à 16. Le conduit 90 fait en sorte qu'il existe, en fonctionnement, une dépression entre l'entrée du conduit 911 et la rainure de collecte 3 de part et d'autre du conduit 90.

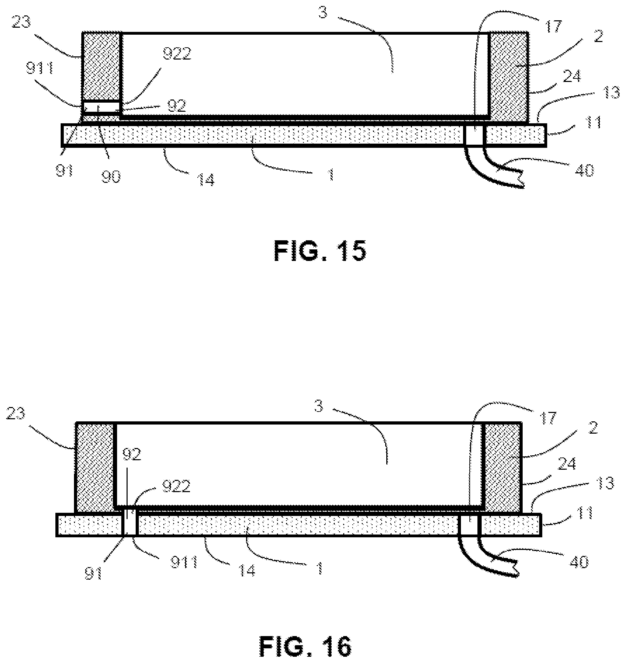

Dans une option, le conduit 90 s'étend parallèlement à la face de friction 26 et à la face interne 13 et débouche sur le bord latéral, par exemple sur le bord intérieur 23, comme illustré en figures 13 à 15. La figure 13 est une vue de dessus de la plaquette. La figure 14 est une vue en perspective de la plaquette. La figure 15 est une vue en coupe le long de la rainure 3 de la figure 14.

Dans une autre option, le conduit 90 s'étend perpendiculairement à la face de friction 26 et à la face interne 13 et traverse la semelle et débouche sur la face externe 14, comme illustré en figure 16. Cette solution présente l'avantage que le conduit 90 peut être percé dans la semelle 1 lors de sa fabrication, et il n'est pas nécessaire de former le conduit 90 dans la garniture 2. La fabrication de la plaquette 10 est donc simplifiée, et son coût est diminué.

Ainsi, on connait une plaquette de frein, la plaquette comprenant une semelle avec une face externe, une face interne et un bord latéral, et une garniture en matériau de friction fixée sur la face interne, la garniture étant délimitée par une face de friction, une face de fixation, et un bord latéral formé d'un bord intérieur, d'un bord extérieur, d'un bord arrière, et d'un bord avant, la garniture étant pourvue d'au moins une rainure de collecte ouverte sur la face de friction et située au moins en partie à proximité du bord arrière, la semelle comprenant au moins un trou d'aspiration en communication fluidique avec la au moins une rainure de collecte, le au moins un trou d'aspiration étant relié à une source de dépression via des moyens de communication, la au moins une rainure de collecte se prolongeant à au moins une de ses extrémités par un conduit dont l'extrémité externe débouche hors de la face de friction par une entrée, et dont l'extrémité interne débouche dans la au moins une rainure de collecte par une sortie qui forme un saut de section avec la au moins une rainure de telle sorte qu'il existe, en fonctionnement, une dépression entre l'entrée du conduit et la au moins une rainure de collecte au travers du conduit.

Comme expliqué ci-dessus, l'aspiration et la captation des particules de freins dans le système de freinage décrit ci-dessus est réalisé en générant un flux d'air qui passe dans la rainure de collecte. Les essais réalisés par les inventeurs ont mis en évidence que plus la vitesse de l'air à proximité de la surface du disque (ou de la roue) est élevée et meilleure est l'efficacité de la captation des particules. Cela signifie que plus la vitesse de l'air le long de la face de friction de la garniture sera élevée, et donc plus le débit d'air sera élevé, plus l'aspiration des particules sera efficace.

Or pour limiter les pertes de charge et donc la puissance de la source d'aspiration, il faut réduire le débit d'air passant dans la rainure. Il existe donc deux besoins antagonistes.

### Description de l'invention

L'invention vise à proposer une plaquette de frein qui permette d'augmenter la vitesse de l'air le long de la face de friction de la garniture sans avoir à augmenter le débit passant dans la rainure de collecte.

Ce but est atteint grâce au fait que l'angle d'inclinaison de l'axe du conduit avec l'axe longitudinal de la rainure est non-nul et est incliné de telle sorte que le flux d'air au niveau de la face de friction de la garniture n'est pas perpendiculaire à la face de friction.

Grâce à ces dispositions, le flux d'air qui circule dans la rainure présente une distribution de vitesses sur la hauteur de la rainure qui est maximale le long la face de friction de la garniture. L'aspiration des particules dans la rainure est ainsi optimisée.

Par exemple, l'angle d'inclinaison se décompose en un angle primaire dans un plan perpendiculaire au plan de la face de friction et un angle secondaire dans le plan de la face de friction, l'angle primaire étant mesuré positivement depuis le plan de la face de friction vers ladite semelle à l'extérieur de la rainure autour de la sortie et l'angle primaire étant compris dans l'intervalle ]0°, 135°].

Par exemple, l'angle secondaire est nul.

Par exemple, l'extrémité externe débouche du côté d'un des bords.

Par exemple, le conduit traverse la semelle, l'extrémité externe débouchant sur la face externe ou sur le bord latéral de la semelle.

Par exemple, la au moins une rainure de collecte est constituée d'une rainure unique qui longe le bord arrière.

Par exemple, la rainure de collecte longe en outre le bord avant.

Par exemple, la rainure de collecte est en forme de C ou en forme de E ou circonférentielle et longe le bord extérieur et/ou le bord intérieur.

Par exemple, l'angle d'inclinaison se décompose en un angle primaire dans un plan perpendiculaire au plan de la face de friction et un angle secondaire dans le plan de la face de friction, l'angle secondaire étant mesuré positivement à l'extérieur de la rainure depuis le plan dans le sens trigonométrique autour d'un axe orienté du fond vers le haut de la rainure, l'angle secondaire étant non-nul et étant compris entre -90° et 90°.

Par exemple, l'angle secondaire est négatif.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue en perspective d'une plaquette de frein selon l'invention ;
[Fig. 2] La figure 2 est une vue en coupe le long de la rainure de collecte d'une plaquette de frein selon l'invention, selon la ligne II-II de la figure 1 ;
[Fig. 3] La figure 3 est une vue en coupe le long de la rainure de collecte d'une plaquette de frein selon un autre mode de réalisation de l'invention, avec un conduit qui débouche sur le bord latéral de la semelle ;
[Fig. 4] La figure 4 est une vue en coupe le long de la rainure de collecte d'une plaquette de frein selon encore un autre mode de réalisation de l'invention, avec un conduit qui débouche sur la face externe de la semelle avec un angle primaire strictement inférieur à 90° ;
[Fig. 5] La figure 5 est une vue en coupe le long de la rainure de collecte d'une plaquette de frein selon encore un autre mode de réalisation de l'invention avec un conduit qui débouche sur la face externe de la semelle avec un angle primaire strictement supérieur à 90° ;
[Fig. 6] La figure 6 est une vue en perspective d'un système de freinage comportant une plaquette de frein selon l'invention ;
[Fig. 7] La figure 7 illustre les flux d'air circulant dans la rainure pour diverses valeurs de l'angle primaire du conduit d'une plaquette de frein selon l'invention ;
[Fig. 8] La figure 8 illustre une plaquette de frein selon l'invention dans le cas où l'angle primaire du conduit est égal à 45°, avec un angle secondaire θ qui est égal à 0°, 45° ou 90° ;
[Fig. 9] La figure 9 illustre les flux d'air circulant dans la rainure pour un angle primaire égal à 45° et un angle secondaire égal à -50° ;
[Fig. 10] La figure 10 illustre les flux d'air circulant dans la rainure pour un angle primaire égal à 45° et un angle secondaire égal à 45° ;
[Fig. 11] La figure 11 est une vue en perspective d'une plaquette de frein selon un autre mode de réalisation de l'invention, avec une rainure en forme de C et un conduit à chaque extrémité de la rainure ;
[Fig. 12] La figure 12 est une vue de dessus d'une plaquette de frein selon encore un autre mode de réalisation de l'invention ;
[Fig. 13] La figure 13, déjà décrite, représente une plaquette selon l'art antérieur en vue de dessus ;
[Fig. 14] La figure 14, déjà décrite, représente une plaquette selon l'art antérieur en perspective ;
[Fig. 15] La figure 15, déjà décrite, est une vue en coupe le long de la rainure de collecte de la plaquette de frein de la figure 14, selon la ligne XV-XV de la figure 14 ;
[Fig. 16] La figure 16, déjà décrite, est une vue en coupe le long de la rainure de collecte d'une variante de la plaquette de frein de la figure 14.

### Description détaillée de l'invention

La présente invention concerne une plaquette de frein 10 d'un frein dans le dispositif de freinage d'un élément rotatif 9 d'une machine. L'invention est décrite ci-dessous dans le cas où la machine est un véhicule routier où ce frein est un frein à disque. Cependant l'invention s'applique aussi bien au cas d'une plaquette de frein dans un frein à semelle qui frotte sur une roue, utilisé dans les véhicules sur rails (ferroviaire), ou au cas d'une plaquette de frein utilisée dans toute autre machine industrielle (par exemple dans le cas d'une éolienne). Dans tous les cas, le freinage d'un élément rotatif de la machine est réalisé par le frottement de la plaquette de frein sur cet élément rotatif lors de sa rotation.

Dans un frein à disque, le freinage s'effectue par friction entre un disque (qui est l'élément rotatif 9) qui est solidaire d'une roue du véhicule, et deux plaquettes de frein 10 qui sont plaquées de part et d'autre de ce disque 9 afin de le prendre en sandwich. Le disque 9 s'étend dans un plan principal et a pour axe de rotation un axe A qui est perpendiculaire à ce plan principal. Chacune des plaquettes 10 s'étend dans ce plan principal de telle sorte que l'épaisseur d'une plaquette 10 s'étend selon l'axe de rotation A.

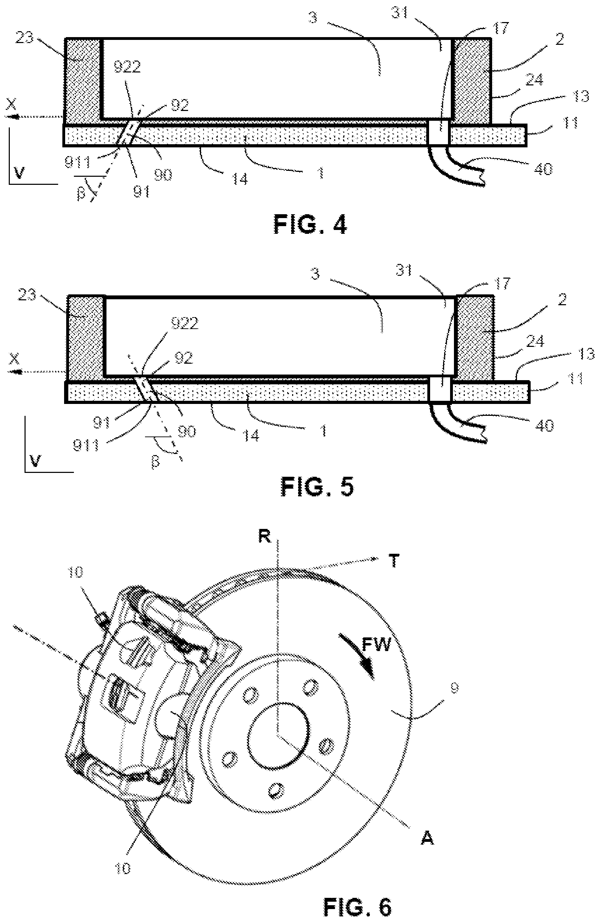

Le disque 9 tourne autour de l'axe de rotation A avec un sens de rotation FW, ce qui définit une direction tangentielle T qui est tangente à la circonférence du disque 9 et orientée dans le sens de rotation FW, et une direction radiale R orthogonale à l'axe de rotation A dans le plan principal du disque 9. Ces éléments sont indiqués sur la figure 6, qui représente le dispositif de freinage monté sur le disque 9.

Dans la description qui suit les termes « intérieur » et « extérieur » désignent les bords ou zones de la plaquette de frein 10 (ou de ses composants) qui sont situés respectivement le plus proche et le plus éloigné de l'axe de rotation A, et les termes « avant » et « arrière » désignent les bords ou zones de la plaquette de frein 10 (ou de ses composants) qui sont situés en amont et en aval respectivement par rapport au sens de circulation des particules 28 émises par la garniture 2 (décrite ci-dessous) qui est également le sens de rotation FW.

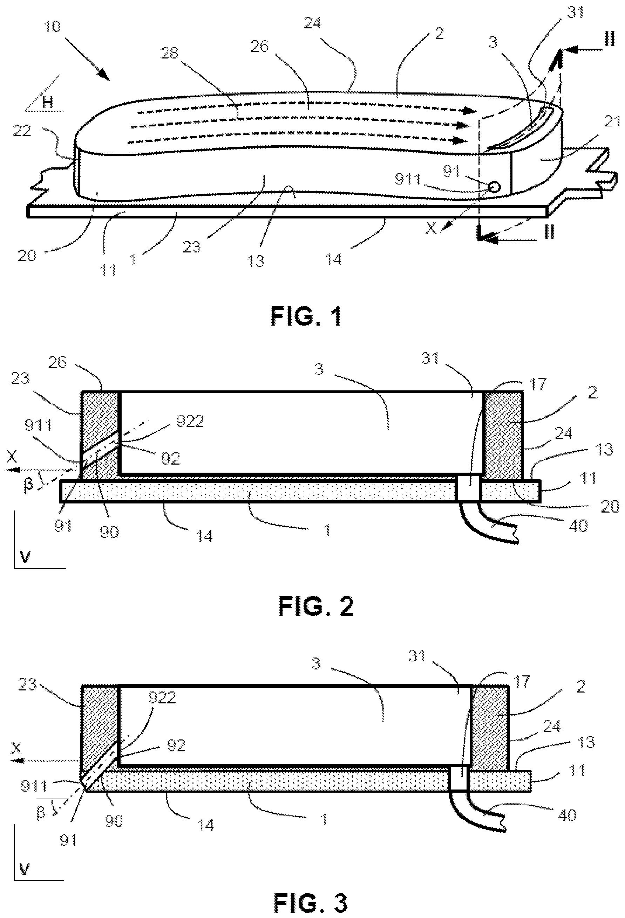

Comme illustré en figures 1 et 2, une plaquette de frein 10 comprend une semelle 1, aussi appelée embase. La semelle 1 est par exemple réalisée en matériau métallique. La semelle 1 est une plaque plane d'épaisseur sensiblement constante (par exemple entre 3 et 5 mm) dont la forme générale dans son plan principal est trapézoïdale avec des bords rectilignes ou courbes. La semelle 1 comprend une face interne 13 sur laquelle est fixée une garniture 2, et une face externe14 qui est opposée et parallèle à la face interne 13. Ces deux faces sont jointes par un bord latéral 11.

La plaquette de frein 10 comprend en outre une garniture 2 constituée d'un matériau de friction. Par exemple ce matériau est un matériau appelé « ferodo ». La garniture 2 est délimitée par une face de friction 26 (face « frottante »), une face de fixation 20 opposée à la face de friction 26, ces deux faces étant parallèles) et fixée sur la semelle 1, un bord intérieur 23, un bord extérieur 24, un bord arrière 21 et un bord avant 22. Les bords extérieur 24, arrière 21, et avant 22 sont convexes ou rectilignes, le bord intérieur 23 est concave ou rectiligne.

La face de friction 26 se rapproche progressivement de la semelle 1 au fur et à mesure de l'usure de la garniture 2. L'épaisseur de la garniture 2 (mesurée selon l'axe de rotation A) diminue par conséquent avec son usure. En fonctionnement, la garniture 2 (et l'élément rotatif 9) relâche des particules 28 à cause de la friction entre la garniture 2 et le disque 9. Les trajets des particules 28 le long de la face de friction 26 sont représentés en pointillés sur la figure 1 (et également sur les figures 13 et 14).

La garniture 2 est pourvue d'au moins une rainure de collecte 3 ouverte sur la face de friction 26, et qui est située à proximité du bord arrière 21.

Par exemple, la surface de la partie de la face de friction 26 qui est située entre le bord arrière 21 et la rainure 3 est inférieure à 10% de la surface totale de la face de friction 26.

La profondeur de la ou les rainures 3 est inférieure à la hauteur de la garniture 2 (mesurée perpendiculairement au plan de la face de friction 26), c'est-à-dire qu'il subsiste de la garniture 2 entre le fond de chaque rainure 3 et la face interne 13 de la semelle 1. La distance entre le fond de chaque rainure 3 et la face interne 13 (mesurée perpendiculairement à cette face interne 13) est appelée « hauteur résiduelle » et est par exemple égale à 20% de la hauteur initiale (avant usure) de la garniture 2. Cette hauteur résiduelle est par exemple égale à 10% de cette hauteur initiale. Cette hauteur résiduelle est par exemple égale à 5% de cette hauteur initiale. Cette hauteur résiduelle est par exemple égale à 1% de cette hauteur initiale.

Alternativement, la profondeur de la ou les rainures 3 est égale à la hauteur de la garniture 2, c'est-à-dire que le fond de la ou les rainures 3 coïncide avec la face interne 13 de la semelle 1.

Alternativement, la profondeur de la ou les rainures 3 est supérieure à la hauteur de la garniture 2, c'est-à-dire que le fond de cette ou ces rainures 3 se situe dans l'épaisseur de la semelle 1 (autrement dit, le fond de cette ou ces rainures 3 est une gorge qui est creusée dans la semelle 1, sans déboucher sur la face externe 14 sauf ponctuellement (voir ci-dessous)),

La rainure de collecte 3, ou au moins une des rainures de collecte 3, s'étend au moins en partie le long du bord arrière 21, et est rectiligne ou suit la courbure du bord arrière 21. La dimension la plus petite de la rainure 3 est son épaisseur, mesurée dans le plan principal de la plaquette 10, sensiblement dans la direction tangentielle T.

Par exemple, la ou les rainures de collecte 3 a une section rectangulaire constante de son extrémité amont à son extrémité aval, et est donc d'épaisseur constante.

La garniture 2 est par exemple pourvue d'une seule rainure continue, sensiblement rectiligne ou présentant un ou plusieurs coudes entre deux ou plusieurs portions sensiblement rectilignes.

Alternativement, la garniture 2 est pourvue d'une pluralité de rainures de collecte 3 qui sont deux à deux disjointes. Par rainures disjointes, on signifie que les rainures ne communiquent pas entre elles autrement que, éventuellement, par un conduit 90, comme décrit ci-dessous.

Ainsi, dans la présente invention, soit la garniture 2 présente une seule rainure de collecte 3 (rainure unique), soit la garniture 2 présente une pluralité de rainures de collecte 3 disjointes. Par exemple, la garniture 2 comprend, outre une rainure de collecte 3 située à proximité du bord arrière 21, une deuxième rainure de collecte 3 (ouverte sur la face de friction 26). Par exemple cette deuxième rainure 3 est située à mi-distance entre le bord arrière 21 et le bord avant 22 et s'étend depuis la proximité du bord intérieur 23 jusqu'à la proximité du bord extérieur 24, en débouchant éventuellement sur le bord intérieur 23 ou le bord extérieur 24.

En résumé, selon l'invention, la garniture 2 est pourvue (présente) au moins une rainure de collecte 3, et cette au moins une rainure de collecte 3 est soit constituée d'une unique rainure dont au moins une portion longe le bord arrière 21, soit constituée d'une pluralité de rainures disjointes dont une première rainure 3a qui longe le bord arrière 21.

Dans le cas d'une unique rainure de collecte 3, cette rainure comporte une seule portion rectiligne ou curviligne, ou plusieurs portions rectilignes ou curvilignes reliées par des coudes pour former un réseau de portions de rainures jointes. La rainure de collecte 3 est alors connexe.

On crée un flux d'air dans la ou les rainures de collecte 3, ce flux d'air 10 étant généré par une source de dépression (système d'aspiration), comme décrit ci-après.

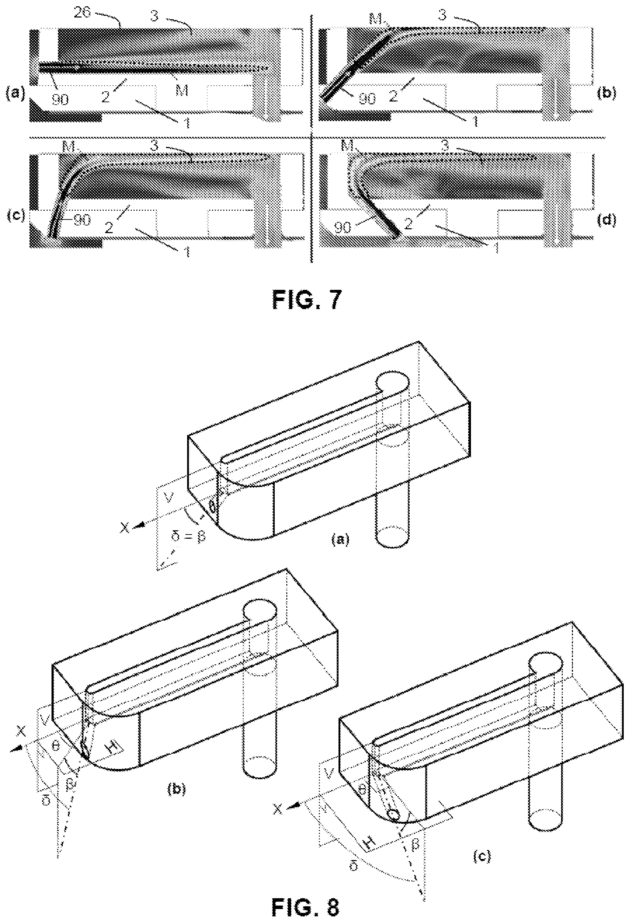

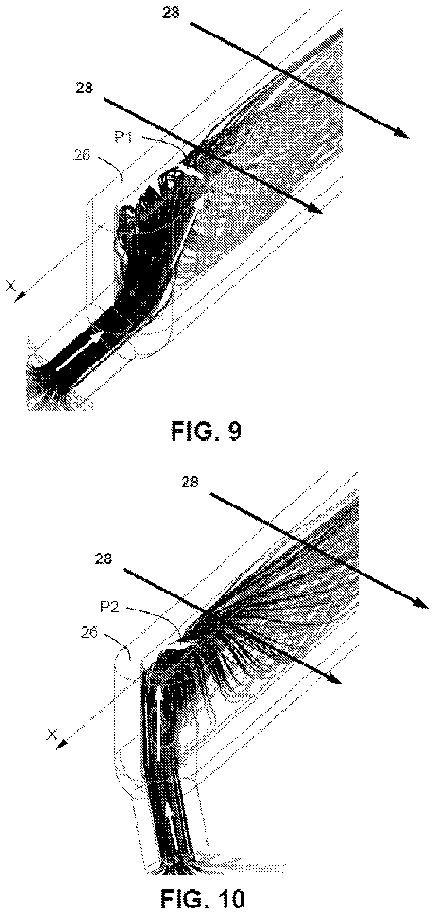

Dans la partie de la description ci-dessous en référence aux figures 1 à 5, on décrit le cas où la rainure de collecte 3 est unique et se prolonge à une de ses extrémités par un conduit 90 (voir ci-dessous) qui débouche du côté du bord intérieur 23. L'invention s'applique de façon similaire au cas où la rainure de collecte 3 débouche du côté du bord extérieur 24. La figure 8 et la figure 9 représentent également le cas où une rainure de collecte 3 se prolonge à une de ses extrémités par un conduit 90 qui débouche du côté du bord intérieur 23. Cette rainure 3 n'est pas nécessairement unique, il peut exister au moins une autre rainure 3 dans la garniture 2 (non illustrées sur ces figures).

Par « le conduit 90 débouche du côté d'un bord», on signifie que le conduit 90 est débouchant à une de ses extrémités à proximité du bord, c'est-à-dire soit au travers de la semelle 1, soit directement sur ce bord.

Dans tous les cas, un conduit 90 débouche à une de ses extrémités hors de la face de friction 26. Un conduit 90 débouche donc soit sur un bord (21, 22, 23, 24) soit au travers de la semelle 1, soit dans une autre rainure.

Comme illustré en figure 1 et 2, et en figures 3 à 5, la rainure de collecte 3 est par exemple une rainure unique qui longe le bord arrière 21, présentant une première extrémité et une deuxième extrémité. On définit l'axe longitudinal X de la rainure 3 comme l'axe qui est parallèle au plan H de la face de friction 26 et selon lequel la rainure 3 commence à s'étendre à sa première extrémité. Si la rainure 3 est rectiligne, l'axe longitudinal X s'étend donc de la première extrémité à la deuxième extrémité de la rainure 3, et le plan V de la rainure 3 est le plan perpendiculaire à la face de friction 26 dans lequel la rainure 3 s'étend. Si la rainure 3 est incurvée, le plan V est défini comme étant le plan dans lequel la rainure 3 commence à s'étendre à sa première extrémité. Ainsi, dans tous les cas le plan V de la rainure 3 contient l'axe longitudinal X.

A proximité du bord extérieur 24, la rainure 3 se termine à sa deuxième extrémité par une extrémité borgne 31, qui est non débouchante sur le bord extérieur 24.

Au niveau de cette extrémité borgne 31, la semelle 1 comporte un trou d'aspiration 17 traversant qui débouche dans la rainure 3. Ce trou d'aspiration 17 est visible sur la figure 2. Ainsi, les particules 28 aspirées dans la rainure 3 passent dans le trou d'aspiration 17 puis dans un tuyau 40 qui fait partie du système d'aspiration. L'air chargé de ces particules 28 passe de la rainure 3 au trou d'aspiration 17 (communication fluidique). Le tuyau 40 est connecté à une de ses extrémités au trou d'aspiration 17. Ces éléments sont visibles sur la figure 2.

Le tuyau 40 est connecté à un mécanisme d'aspiration (non-représenté) qui fait partie du système d'aspiration, et qui est apte à aspirer les particules 28 depuis la rainure 3 au travers du tuyau 40.

La rainure de collecte 3 se prolonge à sa première extrémité par un conduit 90. Le conduit 90 est constitué d'une paroi latérale continue reliant deux extrémités, et n'est ouvert qu'à ces deux extrémités. Le conduit 90 forme ainsi un tunnel. Ce tunnel est rectiligne et l'axe du conduit 90 est donc rectiligne, ce qui permet son perçage. Alternativement le tunnel est incurvé. Dans ce cas, l'axe du conduit 90 est défini comme l'axe selon lequel le conduit 90 commence à s'étendre depuis la rainure de collecte 3 (c'est-à-dire depuis l'extrémité interne 92 du conduit 90, voir définition ci-dessous).

Avantageusement, comme cela est le cas lorsque le conduit 90 est percé, la section du conduit 90 reste constante durant la durée de vie de la plaquette 10, et les performances d'aspiration des particules 28 par la rainure de collecte sont conservées.

Le conduit 90 débouche à son extrémité externe 91 du côté du bord intérieur 23 par une entrée 911. Le conduit 90 débouche à son extrémité interne 92 dans la rainure de collecte 3 par une sortie 922. La sortie 922 forme un saut de section avec la rainure 3, c'est-à-dire que la section augmente brusquement (à l'instar d'une marche) en passant du conduit 90 à la rainure 3.

Cette augmentation de section est visible sur la figure 2, qui est une coupe le long de la ligne II-II de la figure 1, c'est-à-dire tout le long de la rainure de collecte 3 et du conduit 90 depuis le bord intérieur 23 jusqu'au bord extérieur 24.

Grâce à cette brusque augmentation de section (dans le sens normal de l'écoulement de l'air), il existe, en fonctionnement, une dépression entre l'entrée 911 et la rainure de collecte 3 de part et d'autre du conduit 90, c'est-à-dire au travers du conduit 90.

De plus, selon l'invention, l'axe du conduit 90 fait un angle non-nul δ avec l'axe longitudinal X de la rainure 3. L'angle δ est appelé angle d'inclinaison et est représenté sur la figure 8. Ainsi, dans le cas général, l'angle d'inclinaison δ se décompose en un angle primaire β dans un plan vertical (par exemple le plan V) perpendiculaire au plan de la face de friction 26 (plan H) et un angle secondaire θ dans le plan H de la face de friction 26.

Dans un cas particulier, l'angle secondaire θ est nul, et le conduit 90 est incliné uniquement dans le plan V de la rainure 3 selon l'angle primaire β.

Dans un autre cas particulier, l'angle primaire β est nul et le conduit 90 est incliné uniquement dans un plan parallèle au plan H de la face de friction 26 selon l'angle secondaire θ.

L'angle primaire β est mesuré positivement depuis le plan H de la face de friction 26 vers la semelle 1 à l'extérieur de la rainure 3 autour de la sortie 922. L'angle primaire β est toujours positif. Ainsi, l'air qui circule dans le conduit 90 de l'entrée 911 vers la sortie 922 est toujours dirigé vers la face de friction 26, à l'exception de l'autre cas particulier mentionné ci-dessus. En effet, dans cet autre cas particulier l'angle primaire β nul et d'un angle secondaire θ non-nul et donc l'air sort du conduit 90 dans un plan parallèle au plan H de la face de friction 26.

L'angle secondaire θ est mesuré positivement à l'extérieur de la rainure 3 depuis le plan V (dans le plan H) dans le sens trigonométrique autour d'un axe orienté du fond vers le haut de la rainure 3.

Dans le cas où le conduit 90 est rectiligne, l'axe du conduit 90 est la droite qui relie le centre de l'entrée 911 et le centre de la sortie 922. Dans le cas où le conduit 90 est courbe, l'axe du conduit 90 est pris comme étant la tangente au centre de la sortie 922 à la courbe reliant les centres des sections transversales du conduit 90.

Dans le cas particulier où l'angle secondaire θ est nul, c'est-à-dire que le conduit 90 est incliné uniquement dans le plan V de la rainure 3 selon l'angle primaire β, l'existence d'un angle primaire β strictement positif (donc non nul) entraine que le flux d'air qui circule dans la rainure 3 en sortie du conduit 90 présente une distribution de vitesses sur la hauteur de la rainure 3 qui est maximale le long de la face de friction 26 de la garniture. Cette distribution a été expérimentalement observée par les inventeurs, de façon étonnante. La figure 7 montre les distributions de vitesse obtenues avec un angle d'inclinaison δ nul (figure 7 (a)), avec un angle d'inclinaison δ où l'angle primaire β est égal à 45° et l'angle secondaire θ est nul (figure 7 (b)), avec un angle d'inclinaison δ où l'angle primaire β est égal à 75° et l'angle secondaire θ est nul (figure 7 (c)) et avec un angle d'inclinaison δ où l'angle primaire β est égal à 135° et l'angle secondaire θ est nul (figure 7 (d)). La zone M de la rainure 3 où les vitesses sont maximales est entourée par la courbe en pointillés. On note que dans le cas (a) (pas d'inclinaison du conduit 90), la zone M est au fond de la rainure 3, c'est-à-dire proche de la face interne 13. Au contraire, dans les cas (b), (c) et (d) avec une inclinaison du conduit 90 dans le plan V de la rainure 3, la zone M se situe le long de la face de friction 26.

Les essais réalisés par les inventeurs montrent que les résultats illustrés en figure 7 concernant la vitesse longitudinale (selon l'axe longitudinal X) au niveau de la face de friction 26 dans le cas où l'angle secondaire θ est nul restent qualitativement les mêmes pour toutes les valeurs de l'angle secondaire θ (c'est-à-dire entre -90° et 90°). Ainsi, cette vitesse longitudinale varie entre deux valeurs de l'angle secondaire θ (en valeur absolue), mais cette vitesse longitudinale est la même pour deux angles secondaires θ opposés avec la même valeur absolue.

Selon l'invention, l'angle d'inclinaison δ de l'axe du conduit 90 avec l'axe longitudinal X de la rainure 3 est non-nul et est incliné de telle sorte que le flux d'air au niveau de la face de friction 26 de la garniture 20 n'est pas perpendiculaire à la face de friction. En particulier, l'angle d'inclinaison δ n'est pas perpendiculaire au plan H de la face de friction 26. En effet, dans ce cas (angle primaire β = 90° et angle secondaire θ = 0) le flux d'air créé dans la rainure 3 présente une vitesse longitudinale au niveau de la face de friction 26 qui n'est pas maximale, et la vitesse transversale de ce flux d'air (vitesse dans une direction perpendiculaire à l'axe longitudinal X au niveau de la face de friction 26) est nulle. On est alors dans un cas où le flux d'air au niveau de la face de friction 26 n'est pas optimal.

En outre, les essais réalisés par les inventeurs ont montré que la distribution de vitesses totales (la vitesse totale est la somme vectorielle de la vitesse longitudinale et de la vitesse transversale) est maximale et essentiellement le long de la face de friction 26 lorsque l'angle secondaire θ est compris dans l'intervalle [-15°, 15°] et l'angle primaire β est compris dans l'intervalle [60°, 85°]

Ces essais montrent également que la vitesse transversale du flux d'air est non-négligeable (c'est-à-dire non-nulle et du même ordre de grandeur que la vitesse longitudinale du flux d'air) dans deux configurations :
- une première configuration est avec un angle primaire β inférieur à 40° et un angle secondaire θ en dehors de l'intervalle [-10°, 10°].
- une deuxième configuration est avec un angle primaire β supérieur à 40° et un angle secondaire θ en dehors de l'intervalle [-20°, 20°].

Dans un premier mode de réalisation, comme illustré sur les figures 1 et 2, le conduit 90 débouche au niveau de son entrée 911 sur le bord intérieur 23.

Ainsi, en fonctionnement, l'air circule depuis l'entrée 911 au travers du conduit 90 jusqu'à la sortie 922 puis dans la rainure 3 jusqu'au trou d'aspiration 17, puis dans le tuyau 40, ce qui permet l'évacuation des particules et poussières 28 présentes dans l'air. Cette circulation de l'air est spécifique au cas illustré en figures 1 à 5.

Le conduit 90 est de section circulaire constante. Alternativement, le conduit 90 est de section non-circulaire, et/ou est de section variable.

Avantageusement, l'entrée 911 débouche dans la zone du bord intérieur 23 (ou dans le cas général d'un des bords (21, 22, 23, 24) de la garniture 2) qui est la plus proche de la semelle 1 et qui n'est pas consommée à l'issue du temps de fonctionnement normal (durée de vie) de la plaquette 10. L'entrée 911 débouche donc à une distance de la face interne 13 de la semelle 1 qui est supérieure à la hauteur résiduelle de la garniture 2 (voir ci-dessus).

Ainsi, durant toute la durée de vie de la plaquette 10, la section du conduit 90 reste constante, et les performances d'aspiration des particules 28 par la rainure de collecte sont conservées.

Lorsqu'un conduit 90 se situe à une hauteur égale à cette hauteur résiduelle, le conduit 90 joue un rôle de témoin visuel d'usure. En effet, l'atteinte du conduit 90 par usure de la garniture 2 indique que la plaquette 10 a atteint sa durée de vie.

Dans d'autres modes de réalisation, comme illustré en figures 3 à 5, le conduit 90 ne débouche pas au niveau de son entrée 911 sur le bord intérieur 23. Au contraire, le conduit 90 traverse la semelle 1 depuis la rainure de collecte 3 de façon à déboucher au niveau de son entrée 911 sur la semelle 1. Cette solution présente l'avantage que le conduit 90 peut être percé dans la semelle 1 lors de sa fabrication, et il n'est pas nécessaire de former le conduit 90 dans la garniture 2. La fabrication de la plaquette 10 est donc simplifiée, et son coût est diminué. La sortie 922 se situe toujours au niveau de la face interne 13 de la semelle 1.

Dans un de ces modes de réalisation (deuxième mode), comme illustré en figure 3, l'entrée 911 débouche sur le bord latéral 11 de la semelle 1. L'angle primaire β est alors nécessairement strictement inférieur à 90°.

Dans un autre de ces modes de réalisation (troisième mode), comme illustré en figures 4 et 5, l'entrée 911 débouche sur la face externe 14 de la semelle 1. L'angle primaire β est alors nécessairement strictement inférieur à 180°. La figure 4 illustre le cas où l'angle primaire β est compris dans l'intervalle ]0°, 90°[. La figure 5 illustre le cas où l'angle primaire β est compris dans l'intervalle ]90°, 180°[.

Dans les modes de réalisation décrits ci-dessus et illustrés en figures 2 à 5 et 7, l'axe du conduit 90 se situe dans le plan V de la rainure 3. L'angle secondaire θ est donc nul.

Dans un autre mode de réalisation, l'axe du conduit 90 fait avec l'axe longitudinal X de la rainure 3 un angle secondaire θ non-nul et qui est compris entre -90° et 90°.

Cet autre mode de réalisation est illustré en figure 8 (b) de la figure 8 dans le cas où l'angle secondaire θ est égal à 45°, et en figure 8 (c) de la figure 8 dans le cas où l'angle secondaire θ est égal à 90°. A titre de référence, la figure 8 (a) de la figure 8 illustre le cas où l'angle secondaire θ est égal à 0°. L'angle d'inclinaison δ est alors égal à l'angle primaire β. En figure 8, dans les trois cas (a), (b) et (c) l'angle primaire β est égal à 45°, à titre d'exemple.

Cet autre mode de réalisation présente un avantage supplémentaire par rapport au mode où l'angle secondaire θ est nul. En effet, les particules créées par la friction entre la garniture et le disque (ou la roue) du véhicule sont naturellement entrainées le long de la face de friction 26 transversalement par rapport à la rainure 3 (flèche 28 sur la figure 1). Ces particules ont donc tendance à franchir la rainure 3 sans y pénétrer et à s'échapper dans l'atmosphère, ce qui est un problème.

De façon inattendue, les essais réalisés par les inventeurs ont montré que dans le cas où l'angle secondaire θ est non-nul, il peut se créer un flux d'air transversal (en direction perpendiculaire à l'axe longitudinal X) avec des tourbillons au niveau de la face de friction 26 qui est dirigé dans la direction opposée à l'écoulement (flèche 28) de ces particules. Un tel flux d'air contribue ainsi à empêcher l'échappement des particules hors de la rainure 3.

Un tel flux d'air transversal qui contribue à empêcher l'échappement des particules hors de la rainure 3 est créé plus spécialement lorsque l'angle secondaire θ est négatif. En particulier, un tel flux d'air est créé lorsque l'angle secondaire θ est compris dans l'intervalle [-80°, -10°]. La figure 9 illustre le flux d'air dans l'exemple où l'angle primaire β est égal à 45° et l'angle secondaire θ est égal à -50°. La flèche P1 montre la direction de la majorité du flux d'air, en particulier au niveau de la face de friction 26. On voit que ce flux s'écoule en sens inverse de l'écoulement des particules le long de la face de friction (la flèche P1 est dans la même direction et en sens opposé de la flèche 28). Ainsi, le flux d'air provenant du conduit 90 contribue à faire entrer les particules dans la rainure 3. Les essais réalisés par les inventeurs montrent que la vitesse latérale de ce flux d'air est maximale pour un angle primaire β dans l'intervalle [25°, 75°] et un angle secondaire θ dans l'intervalle [-50°, -25°].

Pour certaines valeurs positives de l'angle secondaire θ, les expériences réalisées par les inventeurs montrent qu'il se créé au niveau de la face de friction 26 un flux d'air transversal qui n'empêche pas l'échappement des particules hors de la rainure 3 ou qui favorise cet échappement. Ces valeurs de l'angle secondaire θ correspondent donc à une situation défavorable. La figure 10 illustre l'exemple où l'angle primaire β est égal à 45° et l'angle secondaire θ est égal à 45°. La flèche P2 montre la direction de la majorité du flux d'air, en particulier au niveau de la face de friction 26. On voit que ce flux s'écoule dans le même sens que l'écoulement des particules le long de la face de friction (la flèche P2 est dans la même direction et le même sens que la flèche 28). Ainsi, le flux d'air provenant du conduit 90 contribue à entrainer les particules hors dans la rainure 3.

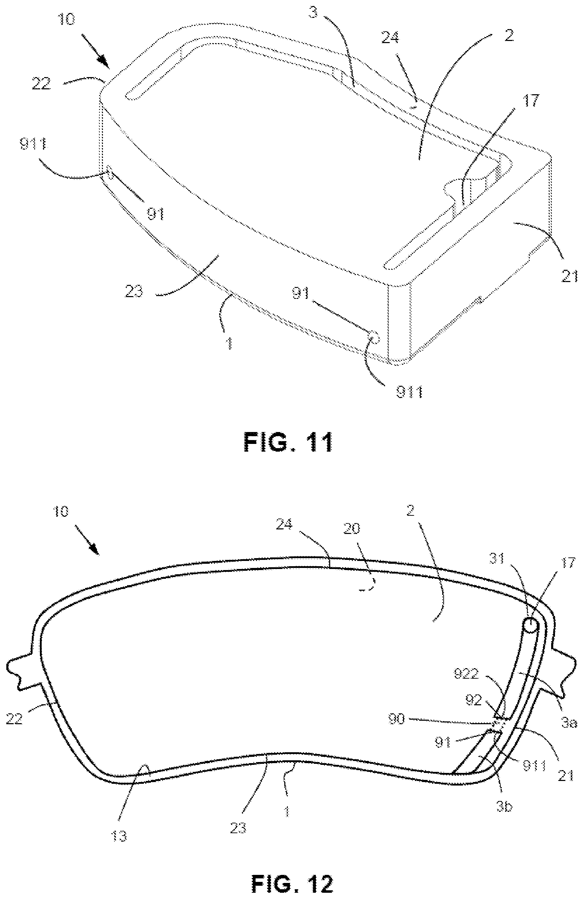

On décrit maintenant encore un autre mode de réalisation de l'invention, en référence à la figure 11. La figure 11 illustre une plaquette de frein dans le domaine ferroviaire.

La rainure de collecte 3 est une rainure unique en forme de C qui longe le bord arrière 21 et le bord avant 22. La portion centrale de la rainure de collecte 3 longe le bord extérieur 24 et relie la portion avant et la portion arrière de la rainure de collecte 3. La portion arrière (qui longe le bord arrière 21) de la rainure de collecte 3 se prolonge à sa première extrémité par un conduit 90 qui débouche du côté du bord intérieur 23. La portion avant (qui longe le bord avant 22) de la rainure de collecte 3 se prolonge à sa deuxième extrémité par un autre conduit 90 qui débouche du côté du bord intérieur 23.

Chacun de ces conduits 90 est similaire à l'un des conduits 90 qui a été décrit en référence aux figures 1 à 5. Alternativement, chacun de ces deux conduits 90 a une géométrie différente de l'autre conduit 90, par exemple des sections différentes de façon à équilibrer les débits.

La semelle 1 comporte un trou d'aspiration 17 traversant qui débouche dans la portion arrière de la rainure 3, comme illustré en figure 11. La rainure 3 y est élargie (la rainure 3 peut aussi ne pas être élargie à cet endroit). Alternativement, le trou d'aspiration 17 débouche dans la portion avant ou dans la portion centrale de la rainure 3. Dans tous les cas, le trou d'aspiration 17 est situé à distance des extrémités de la rainure de collecte 3.

Dans les modes de réalisation ci-dessus, la garniture 2 est pourvue d'une rainure 3 unique.

Dans encore un autre mode de réalisation de l'invention, la garniture 2 est pourvue d'une pluralité de rainures de collecte 3 disjointes. Les configurations suivantes sont alors possibles :
Dans une première configuration, au moins un conduit 90 débouche à son extrémité interne 92 dans une extrémité d'une des rainures 3 et débouche à son extrémité externe 91 du côté d'un des bords (21, 22, 23, 24) de la garniture 2.

Dans une deuxième configuration, au moins un conduit 90 débouche à son extrémité interne 92 dans une extrémité d'une des rainures 3 et débouche à son extrémité externe 91 dans une extrémité d'une autre des rainures 3.

Dans une troisième configuration, qui est une combinaison de la première configuration et de la deuxième configuration, au moins un conduit 90 débouche à son extrémité interne 92 dans une extrémité d'une des rainures 3 et débouche à son extrémité externe 91 du côté d'un des bords (21, 22, 23, 24) de la garniture 2, et au moins un autre conduit 90 débouche à son extrémité interne 92 dans une extrémité d'une des rainures 3 et débouche à son extrémité externe 91 dans une extrémité d'une autre des rainures 3.

La figure 12 illustre un exemple de la deuxième configuration dans le cas où la garniture 2 est pourvue de seulement deux rainures de collecte 3 disjointes, à savoir une première rainure 3a et une deuxième rainure 3b. La première rainure 3a et la deuxième rainure 3b sont dans le prolongement l'une de l'autre et s'étendent le long du bord arrière 21. Un conduit 90 unique s'étend entre une première extrémité de la première rainure 3a et une première extrémité de la deuxième rainure 3b.

Ainsi, le conduit 90 débouche à son extrémité externe 91 dans la deuxième rainure 3b par une entrée 911. Le conduit 90 débouche à son extrémité interne 92 dans la première rainure 3a par une sortie 922. La sortie 922 se situe à la première extrémité de la première rainure 3a.

La seconde extrémité de la première rainure 3a est une extrémité borgne 31, qui est non débouchante sur le bord extérieur 24. Au niveau de cette extrémité borgne 31, la semelle 1 comporte un trou d'aspiration 17 traversant qui débouche dans la rainure 3.

La seconde extrémité de la deuxième rainure 3b débouche sur le bord intérieur 23.

## Revendications

1. Plaquette de frein (10), la plaquette comprenant une semelle (1) avec une face externe (14), une face interne (13) et un bord latéral (11), et une garniture (2) en matériau de friction fixée sur ladite face interne (13), la garniture étant délimitée par une face de friction (26), une face de fixation (20), et un bord latéral formé d'un bord intérieur (23), d'un bord extérieur (24), d'un bord arrière (21), et d'un bord avant (22), ladite garniture (2) étant pourvue d'au moins une rainure de collecte (3) ouverte sur la face de friction (26) et située au moins en partie à proximité du bord arrière (21), la semelle comprenant au moins un trou d'aspiration (17) en communication fluidique avec ladite au moins une rainure de collecte (3), ledit au moins un trou d'aspiration (17) étant relié à une source de dépression via des moyens de communication, ladite au moins une rainure de collecte (3) se prolongeant à au moins une de ses extrémités par un conduit (90) dont l'extrémité externe (91) débouche hors de ladite face de friction (26) par une entrée (911), et dont l'extrémité interne (92) débouche dans ladite au moins une rainure de collecte (3) par une sortie (922) qui forme un saut de section avec ladite au moins une rainure (3) de telle sorte qu'il existe, en fonctionnement, une dépression entre ladite entrée (911) du conduit (90) et ladite au moins une rainure de collecte (3) au travers dudit conduit (90), ledit conduit (90) étant **caractérisé en ce que** l'angle d'inclinaison (δ) de l'axe dudit conduit (90) avec l'axe longitudinal (X) de la rainure (3) est non-nul et est incliné de telle sorte que le flux d'air au niveau de la face de friction (26) de la garniture (2) n'est pas perpendiculaire à la face de friction (26).

2. Plaquette de frein (10) selon la revendication 1 telle que ledit angle d'inclinaison (δ) se décompose en un angle primaire (β) dans un plan (V) perpendiculaire au plan (H) de la face de friction (26) et un angle secondaire (θ) dans ledit plan (H) de la face de friction (26), ledit angle primaire (β) étant mesuré positivement depuis ledit plan (H) de la face de friction (26) vers ladite semelle (1) à l'extérieur de ladite rainure (3) autour de ladite sortie (922) et ledit angle primaire (β) étant compris dans l'intervalle [0°, 135°].

3. Plaquette de frein (10) selon la revendication 1 ou 2 telle que ledit angle secondaire (θ) est nul.

4. Plaquette de frein (10) selon la revendication 3 telle que ladite extrémité externe (91) débouche du côté d'un desdits bords (21, 22, 23, 24).

5. Plaquette de frein (10) selon la revendication 3 telle que ledit conduit (90) traverse ladite semelle (1), ladite extrémité externe (91) débouchant sur ladite face externe (14) ou sur ledit bord latéral (11) de la semelle (1).

6. Plaquette de frein (10) selon l'une quelconque des revendications 1 à 5, telle que ladite au moins une rainure de collecte (3) est constituée d'une rainure unique qui longe ledit bord arrière (21).

7. Plaquette de frein (10) selon la revendication 6 telle que ladite rainure de collecte (3) longe en outre ledit bord avant (22).

8. Plaquette de frein (10) selon la revendication 7 telle que ladite rainure de collecte (3) est en forme de C ou en forme de E ou circonférentielle et longe ledit bord extérieur (24) et/ou ledit bord intérieur (23).

9. Plaquette de frein (10) selon la revendication 1 ou 2, telle que ledit angle d'inclinaison (δ) se décompose en un angle primaire (β) dans un plan (V) perpendiculaire au plan (H) de ladite face de friction (26) et un angle secondaire (θ) dans le plan (H) de ladite face de friction (26), ledit angle secondaire (θ) étant mesuré positivement à l'extérieur de ladite rainure (3) depuis ledit plan (H) dans le sens trigonométrique autour d'un axe orienté du fond vers le haut de la rainure (3) et ledit angle secondaire (θ) étant non-nul et étant compris entre -90° et 90°.

10. Plaquette de frein (10) selon la revendication 9 telle que ledit angle secondaire (θ) est négatif.

## Patentansprüche

1. Bremsbelag (10), wobei der Bremsbelag eine Grundplatte (1) mit einer Außenseite (14), einer Innenseite (13) und einer Seitenkante (11) sowie einen an der Innenseite (13) befestigten Reibbelag (2) aus Reibmaterial umfasst, wobei der Reibbelag durch eine Reibfläche (26), eine Befestigungsfläche (20) und eine Seitenkante begrenzt ist, die aus einer Innenkante (23), einer Außenkante (24), einer Hinterkante (21) und einer Vorderkante (22) besteht, wobei der Reibbelag (2) mit zumindest einer Sammelnut (3) versehen ist, die zur Reibfläche (26) hin offen ist und sich zumindest teilweise in der Nähe der Hinterkante (21) befindet, wobei die Grundplatte zumindest eine Ansaugöffnung (17) aufweist, die in Fluidverbindung mit der zumindest einen Sammelnut (3) steht, wobei die zumindest eine Ansaugöffnung (17) über Verbindungsmittel mit einer Unterdruckquelle verbunden ist, wobei die zumindest eine Sammelnut (3) an zumindest einem ihrer Enden in einen Kanal (90) übergeht, dessen äußeres Ende (91) außerhalb der Reibfläche (26) über einen Einlass (911) mündet und dessen inneres Ende (92) in die zumindest eine Sammelnut (3) über einen Auslass (922) mündet, der mit der zumindest einen Nut (3) einen Querschnittssprung bildet, so dass im Betrieb ein Unterdruck zwischen dem Einlass (911) des Kanals (90) und der zumindest einen Sammelnut (3) über den genannten Kanal (90) hinweg besteht,
wobei der Kanal (90) **dadurch gekennzeichnet ist, dass** der Neigungswinkel (δ) der Achse des Kanals (90) zur Längsachse (X) der Nut (3) ungleich Null ist und mit einer solchen Neigung ausgebildet ist, dass der Luftstrom an der Reibfläche (26) des Reibbelags (2) nicht senkrecht zur Reibfläche (26) verläuft.

2. Bremsbelag (10) nach Anspruch 1,
wobei der Neigungswinkel (δ) aus einem Primärwinkel (β) in einer Ebene (V) senkrecht zur Ebene (H) der Reibfläche (26) und einem Sekundärwinkel (θ) in der Ebene (H) der Reibfläche (26) besteht, wobei der Primärwinkel (β) von der Ebene (H) der Reibfläche (26) ausgehend in Richtung zu der Grundplatte (1) hin außerhalb der Nut (3) um den Auslass (922) herum positiv bemessen ist und der Primärwinkel (β) im Intervall [0°, 135°] liegt.

3. Bremsbelag (10) nach Anspruch 1 oder 2,
wobei der Sekundärwinkel (θ) gleich null ist.

4. Bremsbelag (10) nach Anspruch 3,
wobei das äußere Ende (91) auf der Seite einer der Kanten (21, 22, 23, 24) mündet.

5. Bremsbelag (10) nach Anspruch 3,
wobei der Kanal (90) durch die Grundplatte (1) hindurch verläuft, wobei das äußere Ende (91) an der Außenseite (14) oder an der Seitenkante (11) der Grundplatte (1) mündet.

6. Bremsbelag (10) nach einem der Ansprüche 1 bis 5,
wobei die zumindest eine Sammelnut (3) aus einer einzigen Nut besteht, die entlang der Hinterkante (21) verläuft.

7. Bremsbelag (10) nach Anspruch 6,
wobei die Sammelnut (3) zudem entlang der Vorderkante (22) verläuft.

8. Bremsbelag (10) nach Anspruch 7,
wobei die Sammelnut (3) C-förmig oder E-förmig oder umlaufend ausgebildet ist und entlang der Außenkante (24) und/oder der Innenkante (23) verläuft.

9. Bremsbelag (10) nach Anspruch 1 oder 2,
wobei der Neigungswinkel (δ) aus einem Primärwinkel (β) in einer zu der Ebene (H) der Reibfläche (26) senkrechten Ebene (V) und einem Sekundärwinkel (θ) in der Ebene (H) der Reibfläche (26) besteht, wobei der Sekundärwinkel (θ) außerhalb der Nut (3) von der Ebene (H) ausgehend in trigonometrischer Richtung um eine Achse positiv bemessen ist, die von dem Nutgrund der Nut (3) nach oben gerichtet ist, und wobei der Sekundärwinkel (θ) ungleich Null ist und zwischen -90° und 90° liegt.

10. Bremsbelag (10) nach Anspruch 9,
wobei der Sekundärwinkel (θ) negativ ist.

## Claims

1. A brake pad (10) where the pad comprises a backing plate (1) with an outer surface (14), an inner surface (13) and a lateral edge (11), and a lining (2) of friction material fixed to said inner surface (13), where the lining is delimited by a friction surface (26), an attachment surface (20), and a lateral edge formed of an inner edge (23), an outer edge (24), a rear edge (21), and a front edge (22), where said lining (2) is provided with at least one collection groove (3) open to the friction surface (26) and located at least in part near the rear edge (21), where the backing plate comprises at least one aspiration hole (17) in fluid communication with said at least one collection groove (3), where said at least one aspiration hole (17) is connected to a vacuum source via fluid communication means, where the at least one collection groove (3) is extended at at least one of the ends thereof by a conduit (90) whose outer end (91) opens outside said friction surface (26) by an inlet (911), and whose inner end (92) opens in said at least one collection groove (3) by an outlet (922) which forms a section break with said at least one groove (3) such that there exists, in operation, a reduced pressure between said inlet (911) of the conduit (90) and said at least one collection groove (3) through said conduit (90), and where said conduit (90) is **characterized in that** the angle of inclination (δ) between the axis of the conduit (90) and the longitudinal axis (X) of the groove (3) is nonzero and is inclined such that the airflow near the friction surface (26) of the lining (2) is not perpendicular to the friction surface (26).

2. The brake pad (10) according to claim 1 such that said angle of inclination (δ) is broken down into a primary angle (β) in a plane (V) perpendicular to the plane (H) of the friction surface (26) and a secondary angle (θ) in said plane (H) of the friction surface (26), where said primary angle (β) is measured positively from said plane (H) of the friction surface (26) towards said backing plate (1) on the outside of said groove (3) around said outlet (922) and where said primary angle (β) is included in the interval [0°, 135°].

3. The brake pad (10) according to claim 1 or 2 such that said secondary angle (θ) is zero.

4. The brake pad (10) according to claim 3 such that said outer end (91) opens from the side of one of the edges (21, 22, 23, 24).

5. The brake pad (10) according to claim 3 such that said conduit (90) passes through said backing plate (1), where said outer end (91) opens on said outer surface (14) or on said lateral edge (11) of the backing plate (1).

6. The brake pad (10) according to any one of claims 1 to 5 such that said at least one collection groove (3) is made up of a single groove which follows said rear edge (21).

7. The brake pad (10) according to claim 6 such that said collection groove (3) further follows said front edge (22).

8. The brake pad (10) according to claim 7 such that said collection groove (3) has a C shape or an E shape or circumferential shape and follows along said outer edge (24) and/or said inner edge (23).

9. The brake pad (10) according to claim 1 or 2 such that said angle of inclination (δ) is broken down into a primary angle (β) in a plane (V) perpendicular to the plane (H) of said friction surface (26) and a secondary angle (θ) in the plane (H) of said friction surface (26), where said secondary angle (θ) is measured positively to the outside of said groove (3) from said plane (H) in the trigonometric direction around an axis oriented from the bottom of the groove (3) towards the top, and where said secondary angle (θ) is nonzero and included between -90° and 90°.

10. The brake pad (10) according to claim 9 such that said secondary angle (θ) is negative.
